# FASCICULE DE BREVET EUROPEEN

(11) **EP 3 419 883 B1**
(45) Date de publication et mention de la délivrance du brevet: **01.04.2020**
(21) Numéro de dépôt: 17707640.3
(22) Date de dépôt: 07.02.2017
(51) Int. Cl.: B62D 43/04

(54) **CENTREUR ET MÉCANISME DE LEVAGE DE ROUE DE SECOURS DE VÉHICULE**
ZENTRIEREINRICHTUNG UND HUBMECHANISMUS FÜR EINEN ERSATZREIFEN EINES FAHRZEUGS
CENTERING DEVICE AND LIFTING MECHANISM FOR A SPARE TIRE OF A VEHICLE

(30) Priorité: 24.02.2016 FR 1651480
(43) Date de publication de la demande: 02.01.2019
(73) Titulaire: PSA Automobiles SA, 78300 Poissy (FR)
(72) Inventeur: CONVERS, Germain, 25200 BETHONCOURT (FR)
(86) Numéro de dépôt international: PCT/FR2017/050273
(87) Numéro de publication internationale: WO 2017/144794

(56) Documents cités:
- FR-A1- 3 006 286

## Description

L'invention se rapporte au domaine des mécanismes de levage par treuil de roue de secours de véhicule. Plus précisément, l'invention concerne un centreur de mécanisme de levage de roue de secours, assemblé autour d'un câble. L'invention propose également un véhicule automobile.

En raison du risque de crevaison, les véhicules sont couramment équipés de roues de secours. Ces roues de secours peuvent être montées sous la caisse du véhicule équipé, par exemple sous le coffre arrière. Dans cette configuration, le plancher du véhicule est muni d'un mécanisme de levage et de fixation de la roue. Un tel mécanisme inclut un treuil à câble dont l'enroulement permet de tirer la roue de secours depuis le sol jusqu'à une position haute, au niveau de la surface inférieure du plancher. Le treuil parvient également à ramener la roue de secours lorsqu'elle est éloignée vers l'arrière du véhicule.

Le document FR 3 006 286 A1 divulgue un dispositif de fixation à câble d'une roue de secours sous le plancher d'un véhicule automobile. Le dispositif comporte un treuil avec un câble dont une extrémité est munie de moyens d'arrimage de la roue de secours. Le dispositif présente en outre des moyens de guidage du câble sur le véhicule et une pièce de centrage distincte des moyens d'arrimage. La pièce de centrage est disposée autour du câble dans le trou de centrage de la roue en vue de maintenir les moyens d'arrimage en position centrée par rapport à la roue. Ceci permet d'optimiser le maintien entre la roue et les moyens d'arrimage. La pièce de centrage est constituée de plusieurs éléments encliquetés autour de l'orifice traversé par le câble du treuil. Cette solution permet de contrôler l'effort nécessaire à l'assemblage des éléments autour du câble. Toutefois, le positionnement du câble dans l'orifice lors de l'assemblage est complexe. En effet il nécessite une certaine minutie, ce qui augmente le coût d'assemblage.

L'invention a pour objectif de résoudre au moins un des problèmes posés par l'art antérieur. Plus précisément, l'invention a pour objectif de simplifier le montage d'un dispositif de centrage autour d'un câble. L'invention a également pour objectif d'améliorer la précision de positionnement du dispositif de centrage.

L'invention a pour objet un dispositif de centrage de roue de secours de véhicule, notamment pour mécanisme de levage de roue de secours de véhicule, le dispositif comprenant : un orifice avec un pourtour destiné à entourer un câble ; deux portions mobiles comprenant chacune une partie du pourtour de l'orifice, les portions étant adaptée pour être écartées l'une de l'autre en écartant les parties de pourtour afin de placer le câble dans l'orifice ; caractérisé en ce qu'au moins une des portions comprend des moyens de guidage de câble vers sa partie de pourtour afin de pouvoir y guider le câble lorsque les portions sont écartées l'une de l'autre.

Selon des modes particuliers de réalisation, le dispositif peut comprendre une ou plusieurs des caractéristiques suivantes, prises isolément ou selon toutes les combinaisons techniques possibles :
- Le dispositif de centrage comprend une charnière articulant les portions mobiles l'une par rapport à l'autre.
- Les moyens de guidage sont disposés sur une même portion.
- Les moyens de guidage sont disposés de part et d'autre d'une même partie de pourtour.
- Le dispositif de centrage comprend deux faces opposées de part et d'autre de l'orifice, les moyens de guidage étant disposés au niveau de chacune des faces opposées.
- Les moyens de guidage comprennent au moins une plaquette de guidage.
- Au moins une ou chaque plaquette de guidage comprend un bord de guidage courbe qui est tangent à une partie de pourtour associée.
- Au moins une des portions comprend une cavité destinée à recevoir les moyens de guidage lorsque le pourtour de l'orifice est fermé.
- Le dispositif de centrage comprend une interface entre les portions, chaque portion comprenant une face d'interface à l'interface, les moyens de guidage faisant saillie depuis au moins une des faces d'interface lorsque les portions sont écartées l'une de l'autre.
- L'interface coupe l'orifice et/ou le pourtour.
- Les parties de pourtour forment des encoches dans chaque face d'interface.
- Le dispositif de centrage comprend une cloison s'étendant d'une portion à l'autre, la cloison comprenant une zone de moindre épaisseur formant la charnière.
- L'orifice est disposé au centre du dispositif, notamment au centre des faces opposées.
- Lorsque les portions sont rapprochées l'une de l'autre, le pourtour est fermé.
- Lorsque les parties de pourtour sont écartées, le pourtour est ouvert.
- Le dispositif est cylindrique et comprend éventuellement un méplat sur son périmètre, la charnière étant éventuellement formée dans le méplat.
- Le dispositif de centrage est une pièce de centrage et/ou venu de matière et/ou monobloc.
- Le dispositif comprend des moyens d'encliquetage configurés pour maintenir les portions dans une configuration où le pourtour de l'orifice est fermé.
- Lorsque le pourtour est fermé il est continu, et/ou les portions s'épousent, notamment sur toute leur largeur et/ou toute leur hauteur.
- Au moins une partie de pourtour comprend deux extrémités opposées, les moyens de guidage prolongeant chaque extrémité opposée de ladite partie de pourtour.
- Le dispositif de centrage est majoritairement creux.
- Le mécanisme de levage de la roue de secours comprend un treuil avec un câble dont une extrémité présente des moyens d'arrimage de roue de secours, les moyens d'arrimage étant distinct du dispositif de centrage; et/ou comprend des moyens de guidage de câble par rapport au véhicule.

L'invention a également pour objet un ensemble comprenant :un dispositif de centrage, et une jante de roue de véhicule avec ouverture centrale qui entoure le dispositif de centrage, remarquable en ce que dispositif de centrage est conforme à l'invention, le diamètre de l'ouverture étant éventuellement ajusté au contour du dispositif de centrage, le dispositif étant optionnellement réalisé en polymère.

L'invention a également pour objet un véhicule, notamment automobile, comprenant un dispositif de centrage de roue de secours de véhicule, remarquable en ce que le dispositif de centrage est conforme à l'invention, la roue de secours comprenant une jante avec une ouverture centrale placée autour du dispositif de sorte à maintenir les portions l'une contre l'autre.

Selon un mode particulier de l'invention, le véhicule comprend des roues avec des jantes présentant des ouvertures centrales dont le diamètre est sensiblement égal à la largeur du dispositif de centrage. La largeur peut être la largeur maximale, et éventuellement mesurée perpendiculairement à l'orifice.

De manière générale, les modes particuliers de chaque objet de l'invention sont également applicables aux autres objets de l'invention. Dans la mesure du possible, chaque objet de l'invention est combinable aux autres objets.

La présence des moyens de guidage permet d'accompagner le câble dans le creux du pourtour lors du montage, et d'atteindre facilement son fond. Ceci facilite le montage, et évite de refermer les portions contre le câble. La précision de manipulation requise diminue, ce qui accélère le montage. Une économie substantielle est donc permise lors de la fabrication en grande série du véhicule correspondant.

Puisque le positionnement du câble dans une moitié d'orifice est plus simple, l'orifice peut être rétrécit sans pénaliser l'ergonomie de montage. Puisque la taille de l'orifice peut être réduite, la précision de positionnement offerte par dispositif de centrage peut être améliorée. Par là, le dispositif devient plus efficace. Par ailleurs, le dispositif de centrage peut être manipulé par le conducteur. Puisque sa manipulation est aisée, la qualité perçue croît.

D'autres caractéristiques et avantages de la présente invention seront mieux compris à l'aide de la description donnée à titre d'exemple et en référence aux dessins parmi lesquels :
La figure 1 est une vue de la face inférieure d'une portion de plancher arrière d'un véhicule automobile, le plancher étant équipé d'un mécanisme de levage d'une roue de secours, conforme à l'invention.
La figure 2 est une vue de détail du mécanisme de levage de la figure 1.
La figure 3 est une représentation de la roue de secours destinée à être levée par le mécanisme de levage de la figure 1.
La figure 4 est une vue en coupe du plancher du véhicule de la figure 1, montrant la roue de secours et la boîte d'outillage en position de fixation sous ledit plancher.
La figure 5 est une vue en perspective du dispositif de centrage visible aux figures 1 et 4 et destiné à coopérer avec le trou de centrage de la roue de secours, le dispositif étant ouvert.
La figure 6 représente le dispositif de centrage de la figure 5 en configuration fermée autour du câble.

Dans la description qui va suivre, le terme axial renvoie à une direction selon l'axe de l'orifice du dispositif de centrage. L'avant du véhicule correspond à son sens principal de circulation.

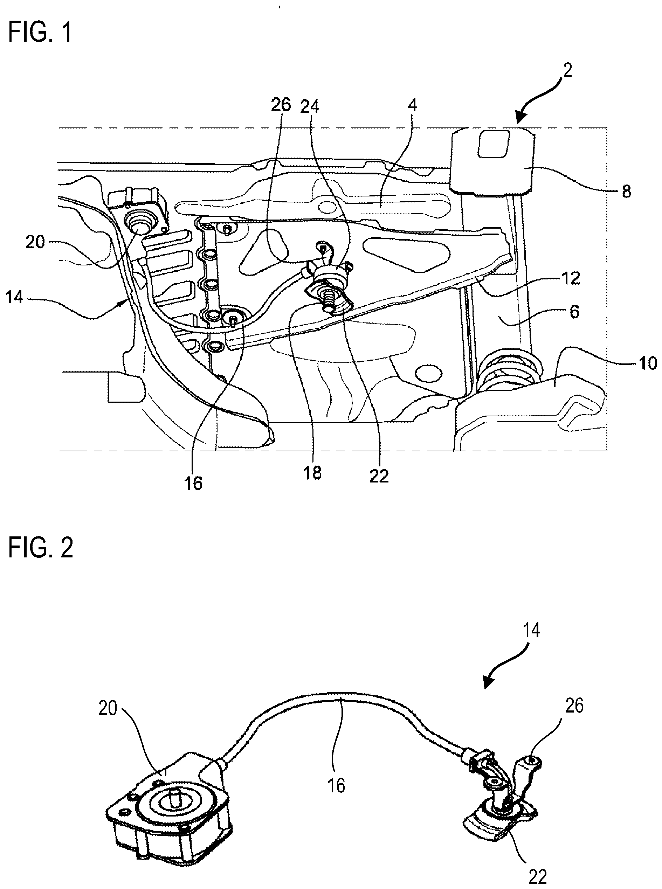

La figure 1 montre la face inférieure du plancher d'un véhicule 2, notamment d'un véhicule automobile.

La partie arrière de ce dernier comprend essentiellement un plancher 4 ainsi que deux longerons 6 dont seulement celui de droite est visible à la figure 1. On peut par ailleurs observer que ce longeron 6 se termine à l'arrière par une bride 8 de fixation du pare-chocs arrière (non représenté). Ce longeron 6 sert par ailleurs de support à la suspension 10 de l'essieu arrière. C'est donc la portion arrière droite du plancher du véhicule qui est visible à la figure 1. Sur cette portion du plancher 4 est fixée une tôle ou plaque 12 contre laquelle la roue de secours est destinée à venir s'appuyer. Cette dernière n'est pas représentée par soucis de clarté.

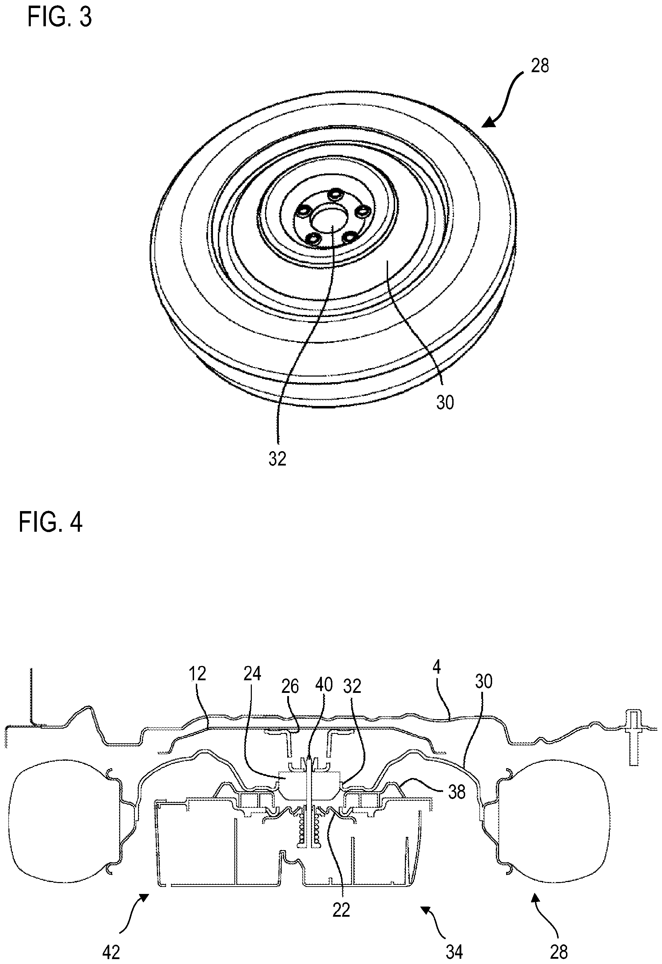

La tôle 12 supporte elle-même sur sa face inférieure un élément de guidage 26 d'un câble s'étendant le long de sa gaine 16 depuis un treuil 20 vers un arrêt 18. Ce dernier retient un élément d'arrimage 22 en forme de palette, destiné à coopérer par engagement mécanique avec une boîte d'outillage (visible à la figure 4). Un dispositif de centrage 24 est monté autour du câble entre l'élément d'arrimage 22 et l'élément de guidage 26 du câble.

Le câble, son arrêt 18, l'élément d'arrimage 22, la gaine 16 du câble et le treuil 20 forment un mécanisme de levage 14 avec un système de fixation de la roue de secours ; le mécanisme de levage 14 étant représenté de manière isolée en figure 2. Bien entendu, le présent mécanisme de levage 14 convient également au levage et à la fixation des autres roues du véhicule, par exemple après l'utilisation de la roue de secours.

On peut observer que le treuil 20 comprend un axe d'entrainement dont la surface extérieure est apte à transmettre un couple. Cet axe est destiné à être accessible depuis l'intérieur du coffre à bagages du véhicule et à être actionné par un moyen mécanique tel qu'une manivelle. D'autres moyens d'actionnement sont bien sûr envisageables, tels que notamment un moteur électrique ou tout autre moyen mécanique. L'actionnement du treuil par rotation de l'axe d'entrainement provoque, selon le sens de rotation, un déroulement ou un enroulement du câble sur un tambour logé dans le treuil. La gaine 16 permet de guider le câble suivant un parcours essentiellement libre entre le treuil 20 et l'élément de guidage 26. Celui-ci comprend deux pattes de fixation ainsi qu'une portion courbée à essentiellement 90°. La portion courbée est apte à guider le câble depuis une direction généralement horizontale et parallèle au plancher, à une direction généralement verticale et perpendiculaire au plancher.

La figure 3 présente une roue de secours 28 telle que celle pouvant être manipulée par le mécanisme de levage. Les roues du véhicule correspondant peuvent être similaire à la roue de secours 28, leurs bandes de roulement peuvant être élargies.

Cette roue 28 comprend un pneu, et une jante annulaire 30 ayant une forme de disque. La jante 30 est pourvue d'une ouverture de centrage 32 sur un moyeu de roue du véhicule. La jante 30 délimite un espace de rangement cylindrique pour recevoir une optionnelle boîte à outils. L'ouverture 32 traverse la jante 30 et est positionnée au centre. Cette ouverture 32 circulaire est adaptée pour assurer une concentricité avec un axe tournant d'un essieu. L'ouverture 32 permet de centrer la roue et de reprendre les efforts verticaux importants notamment lors de roulage sur des routes en mauvais état.

La figure 4 est une vue en coupe du plancher 4 du véhicule de la figure 1, montrant le système de fixation 42 en configuration de rangement où la roue de secours 28 et la boîte à outils 34 sont en position de fixation sous ledit plancher 4. Le câble 40 est tendu.

On peut y observer la tôle 12 déjà décrite en relation avec la figure 1. Il est à noter que la jante 30, de forme non plane, est axialement excentrée comme cela est courant sur les roues de véhicule. Elle est de plus galbée à la manière d'un tore tronqué suivant un plan perpendiculaire à son axe principal, formant ainsi un volume dans lequel est logée la boîte à outils 34. Celle-ci comprend deux éléments délimitant le volume intérieur de rangement. L'élément d'arrimage 22 coopère avec l'élément supérieur de la boîte à outils 34. Une entretoise 38 maintient à distance la boîte à outils 34 de la jante 30.

Le dispositif de centrage 24 est cerclé dans le trou de centrage 32 de la roue de secours 28. Il assure ainsi un guidage du câble 40 entre l'élément d'arrimage 22 et la jante 30. En effet, l'élément d'arrimage 22 est axialement à distance du bord de la jante 30, autour du trou de centrage 32. En l'absence du dispositif de centrage 24 et en cas d'inclinaison du câble par rapport à la direction axiale et verticale, le câble 40 exercerait sur l'élément d'arrimage 22 un effort dont la composante horizontale pourrait le décaler dans une position instable, susceptible de provoquer la perte de la roue et de la boîte d'outillage.

En raison du contact entre le dispositif de centrage 24 et l'élément de guidage 26, la jante 30 peut être centrée par rapport à ce dernier. De plus, le dispositif de centrage 24 et la tension du câble 40 centrent l'élément d'arrimage 22 par rapport à la jante 30 grâce à leur proximité. Le principe d'utilisation du mécanisme de levage peut être conforme à celui du dispositif de fixation présenté dans le document FR 3 006 286 B1.

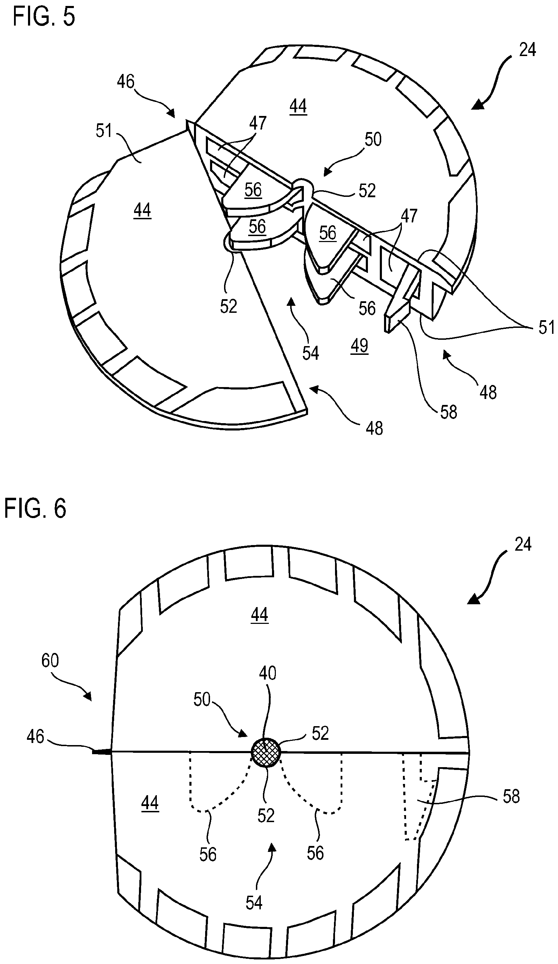

La figure 5 est une vue dans l'espace du dispositif de centrage 24 en configuration ouverte.

Le dispositif de centrage 24 comporte deux portions 44 mobiles l'une par rapport à l'autre. Ces portions 44 peuvent être montées pivotantes l'une par rapport à l'autre à l'aide d'une charnière 46. Celle-ci peut être créée dans une cloison pliable qui est commune aux deux portions 44. Les portions 44 peuvent être symétriques par rapport à leur interface, qui est éventuellement plane. Les portions 44 peuvent présenter des formes de demi-disques, ou de demi-cylindres.

Le dispositif de centrage 24 peut être réalisé par moulage d'une matière plastique. Il peut être venu de matière. Le dispositif de centrage 24 forme généralement un corps, éventuellement évidé. Il peut être délimité par une coquille externe. Certaines cavités 47 peuvent s'étendre depuis des faces d'interface 48 des portions 44 qui forment l'interface entre les portions 44. Chaque face d'interface 48 peut présenter des cavités 47. En configuration ouverte, les faces d'interface 48 sont écartées l'une de l'autre ; si bien qu'un passage 49 s'ouvre à l'interface. Ce passage d'interface 49 est utile pour l'introduction du câble (non représenté) lors de l'assemblage.

Le dispositif de centrage 24 comprend un orifice 50, généralement en position centrale. L'orifice 50 est cylindrique, il est destiné à recevoir le câble. Son pourtour peut être circulaire. Il traverse de part en part le dispositif de centrage 24, et en relie les faces opposées 51. Les faces opposées 51 peuvent être des faces principales. L'orifice 50 s'étend perpendiculairement par rapport au diamètre du dispositif de centrage 24. Il est formé partiellement danc chaque portion 44, si bien que son pourtour est partagé en plusieurs parties 52 distribuées sur les portions 44. Dès lors en position ouverte, lorsque les portions 44 sont écartées l'une de l'autre, le pourtour s'ouvre. Les parties 52 s'éloignent l'une de l'autre. Les portions 44 sont mobiles au moins entre une position fermée où le pourtour renferme le câble, et une position ouverte où le câble peut être introduit dans l'orifice 50. L'ouverture du dispositif 24 donne accès à l'orifice 50 depuis l'extérieur.

Le dispositif de centrage 24 peut être monté, et éventuellement démonté du câble. Pour faciliter le positionnement du câble lors du montage, le dispositif de centrage 24 est équipé de moyens de guidage 54. Les moyens de guidage 54 peuvent être placés sur une même portion 44. Alternativement, ils pourraient être répartis sur les deux portions. Les moyens de guidage 54 sont disposés au niveau de l'orifice 50, notamment au contact des parties 52 du pourtour. Ces moyens de guidage 54 peuvent être placés de chaque côté d'une partie 52 de pourtour.

Les moyens de guidage 54 peuvent comprendre au moins une plaquette de guidage 56, éventuellement au moins deux plaquettes de guidage 56. En l'occurrence, quatre plaquettes de guidage 56 sont prévues sur la même portion 44. Bien entendu, il est possible d'en prévoir davantage, et même de les répartir sur les portions. Les plaquettes de guidage 56 peuvent avoir des formes d'ailerons. Elles peuvent montrer des bords de guidage qui prolongent la partie 52 de pourtour, éventuellement avec une tangeance. Les plaquettes de guidage 56 peuvent être agencées en haut et en bas du dispositif de centrage 24. Elles peuvent être placées au niveau de la face supérieure et de la face supérieure du dispositif, soit à chaque extrémité axiale de l'orifice 50.

Afin de permettre un maintien en position fermée, le dispositif de centrage 24 peut présenter des moyens d'encliquetage 58. Ceux-ci peuvent être libérés pour rouvrir le dispositif de centrage 24. Les moyens d'encliquetage 58 peuvent comprendre une patte avec un crochet afin de permettre un engagement de matière. La portion 44 opposée peut présenter une cavité 47 permettant de recevoir cette patte en position fermée.

La figure 6 présente le dispositif de centrage 24 dans une configuration fermée autour du câble 40. Le passage à l'interface est alors fermé. Le dispositif de centrage 24 est vu à plat. Les moyens de guidage 54 sont tracés en pointillés, tout comme les moyens d'encliquetage 58.

La charnière 46 est fermée. Les portions 44 sont réunies, elles sont plaquées l'une contre l'autre sur toute leur longueur, c'est-à-dire tout le long de l'interface. Le câble 40 occupe l'orifice 50 dont les parties 52 de pourtour sont jointes. Elles forment alors une boucle close, et donc continue. Les plaquettes de guidage 56 sont enveloppées dans la portion 44 opposée. Elles sont diamétralement opposées par rapport au câble 40, et par conséquent diamétralement opposées par rapport aux parties 52 de pourtour. Les moyens d'encliquetage 58 sont emmanchés dans une cavité avec une butée de forme complémentaire.

Le dispositif de centrage 24 peut présenter un méplat latéral 60, par exemple au niveau de la charnière 46. Ce méplat 60 peut être généralement perpendicularie à l'interface. Ce méplat 60 économise de la matière, et réduit la masse. Il permet également de bloquer le mouvement d'ouverture des portions 44.

Suivant une alternative de l'invention, les portions sont séparées les unes des autres. Eventuellement, le dispositif de centrage comporte trois, quatre ou davantage de portions. Ces portions peuvent être isolées les unes des autres et se fixer par encliquetage. Ou encore, elles peuvent être reliées les unes au autres à l'aide de charnières. En configuration fermée, les portions forment un bloc autour du câble.

## Revendications

1. Dispositif de centrage (24) de roue de secours (28) de véhicule, notamment pour mécanisme de levage de roue de secours (28) de véhicule, le dispositif (24) comprenant :
- un orifice (50) avec un pourtour destiné à entourer un câble (40) ;
- deux portions (44) mobiles comprenant chacune une partie (52) du pourtour de l'orifice (50), les portions (44) étant adaptée pour être écartées l'une de l'autre en écartant les parties (52) de pourtour afin de placer le câble (40) dans l'orifice (50) ;
**caractérisé en ce qu'**au moins
une des portions (44) comprend des moyens de guidage (54) de câble vers sa partie (52) de pourtour afin de pouvoir y guider le câble (40) lorsque les portions (44) sont écartées l'une de l'autre.

2. Dispositif de centrage (24) selon la revendication 1, **caractérisé en ce qu'**il comprend une charnière (46) articulant les portions (44) mobiles l'une par rapport à l'autre.

3. Dispositif de centrage (24) selon l'une des revendications 1 à 2, **caractérisé en ce que** les moyens de guidage (54) sont disposés sur une même portion (44).

4. Dispositif de centrage (24) selon l'une des revendications 1 à 3, **caractérisé en ce que** les moyens de guidage (54) sont disposés de part et d'autre d'une même partie (52) de pourtour.

5. Dispositif de centrage (24) selon l'une des revendications 1 à 4, **caractérisé en ce qu'**il comprend deux faces opposées (51) de part et d'autre de l'orifice (50), les moyens de guidage (54) étant disposés au niveau de chacune des faces opposées (51).

6. Dispositif de centrage (24) selon l'une des revendications 1 à 5, **caractérisé en ce que** les moyens de guidage (54) comprennent au moins une plaquette de guidage (56).

7. Dispositif de centrage (24) selon la revendication 6, **caractérisé en ce qu'**au moins une ou chaque plaquette de guidage (56) comprend un bord de guidage courbe qui est tangent à une partie (52) de pourtour associée.

8. Dispositif de centrage (24) selon l'une des revendications 1 à 7, **caractérisé en ce qu'**au moins une des portions (44) comprend une cavité (47) destinée à recevoir les moyens de guidage (54) lorsque le pourtour de l'orifice (50) est fermé.

9. Dispositif de centrage (24) selon l'une des revendications 1 à 8, **caractérisé en ce qu'**il comprend une interface entre les portions (44), chaque portion (44) comprenant une face d'interface (48) à l'interface, les moyens de guidage (54) faisant saillie depuis au moins une des faces d'interface (48) lorsque les portions (44) sont écartées l'une de l'autre.

10. Véhicule, notamment automobile, comprenant un dispositif de centrage (24) de roue de secours (28) de véhicule, **caractérisé en ce que** le dispositif de centrage (24) est conforme à l'une des revendications 1 à 9, la roue de secours (28) comprenant une jante (30) avec une ouverture centrale (32) placée autour du dispositif (24) de sorte à maintenir les portions (44) l'une contre l'autre.

## Patentansprüche

1. Zentriereinrichtung (24) eines Fahrzeugersatzrads (28), insbesondere für einen Ersatzradhubmechanismus (28) eines Fahrzeugs, wobei die Vorrichtung (24) Folgendes umfasst:
- eine Öffnung (50) mit einem Umfang, die dazu vorgesehen ist, ein Kabel (40) zu umgeben;
- zwei bewegliche Abschnitte (44), die jeweils einen Teil (52) des Umfangs der Öffnung (50) umfassen, wobei die Abschnitte (44) angepasst sind, um voneinander entfernt zu werden, indem die Umfangsteile (52) entfernt werden, um das Kabel (40) in der Öffnung (50) zu platzieren;
**dadurch gekennzeichnet, dass**
mindestens einer der Abschnitte (44) Mittel (54) zum Führen des Kabels zu seinem Umfangsteil (52) umfasst, um das Kabel (40) dort zu führen, wenn die Abschnitte (44) voneinander entfernt sind.

2. Zentriereinrichtung (24) nach Anspruch 1, **dadurch gekennzeichnet, dass** sie ein Scharnier (46) umfasst, das die Abschnitte (44), die zueinander beweglich sind, anlenkt.

3. Zentriereinrichtung (24) nach einem der Ansprüche 1 bis 2, **dadurch gekennzeichnet, dass** die Führungsmittel (54) auf demselben Abschnitt (44) angeordnet sind.

4. Zentriereinrichtung (24) nach einem der Ansprüche 1 bis 3, **dadurch gekennzeichnet, dass** die Führungsmittel (54) zu beiden Seiten eines selben Umfangsteils (52) angeordnet sind.

5. Zentriereinrichtung (24) nach einem der Ansprüche 1 bis 4, **dadurch gekennzeichnet, dass** sie zwei entgegengesetzte Flächen (51) zu beiden Seiten der Öffnung (50) umfasst, wobei die Führungsmittel (54) im Bereich jeder der entgegengesetzten Flächen (51) angeordnet sind.

6. Zentriereinrichtung (24) nach einem der Ansprüche 1 bis 5, **dadurch gekennzeichnet, dass** die Führungsmittel (54) mindestens ein Führungsplättchen (56) umfassen.

7. Zentriereinrichtung (24) nach Anspruch 6, **dadurch gekennzeichnet, dass** mindestens ein oder jedes Führungsplättchen (56) einen gebogenen Führungsrand umfasst, der an einem assoziierten Umfangsteil (52) tangierend ist.

8. Zentriereinrichtung (24) nach einem der Ansprüche 1 bis 7, **dadurch gekennzeichnet, dass** mindestens einer der Abschnitte (44) einen Hohlraum (47) umfasst, der dazu bestimmt ist, die Führungsmittel (54) aufzunehmen, wenn der Umfang der Öffnung (50) geschlossen ist.

9. Zentriereinrichtung (24) nach einem der Ansprüche 1 bis 8, **dadurch gekennzeichnet, dass** sie zwischen den Abschnitten (44) eine Schnittfläche umfasst, wobei jeder Abschnitt (44) an der Schnittfläche eine Schnittflächenseite (48) umfasst, wobei die Führungsmittel (54) ausgehend von mindestens einer der Schnittflächenseiten (48) vorragen, wenn die Abschnitte (44) voneinander entfernt sind.

10. Fahrzeug, insbesondere Kraftfahrzeug, das eine Zentriereinrichtung (24) eines Fahrzeugersatzrads (28) umfasst, **dadurch gekennzeichnet, dass** die Zentriereinrichtung (24) einem der Ansprüche 1 bis 9 entspricht, wobei das Ersatzrad (28) eine Felge (30) mit einer zentralen Öffnung (32) umfasst, die um die Vorrichtung (24) derart platziert ist, dass die Abschnitte (44) gegeneinander gehalten werden.

## Claims

1. A centering device (24) for a spare tyre (28) of a vehicle, in particular for a lifting mechanism for the spare tyre (28) of a vehicle, the device (24) including:
- an orifice (50) with a periphery intended to surround a cable (40);
- two movable portions (44) each including a part (52) of the periphery of the orifice (50), the portions (44) being adapted to be spread apart from one another, separating the parts (52) of the periphery so as to place the cable (40) in the orifice (50);
**characterized in that**
one of the portions (44) includes means (54) for guiding the cable towards its part (52) of the periphery so as to be able to guide the cable (40) there when the portions (44) are spread apart from one another.

2. The centering device (24) according to Claim 1, **characterized in that** it includes a hinge (46) articulating the movable portions (44) one with respect to the other.

3. The centering device (24) according to one of Claims 1 to 2, **characterized in that** the guiding means (54) are disposed on the same portion (44).

4. The centering device (24) according to one of Claims 1 to 3, **characterized in that** the guiding means (54) are disposed on either side of the same part (52) of the periphery.

5. The centering device (24) according to one of Claims 1 to 4, **characterized in that** it includes two opposite faces (51) on either side of the orifice (50), the guiding means (54) being disposed at the level of each of the opposite faces (51).

6. The centering device (24) according to one of Claims 1 to 5, **characterized in that** the guiding means (54) include at least one guide plate (56).

7. The centering device (24) according to Claim 6, **characterized in that** at least one or each guide plate (56) includes a curved guiding edge which is tangent to an associated part (52) of the periphery.

8. The centering device (24) according to one of Claims 1 to 7, **characterized in that** at least one of the portions (44) includes a cavity (47) intended to receive the guiding means (54) when the periphery of the orifice (50) is closed.

9. The centering device (24) according to one of Claims 1 to 8, **characterized in that** it includes an interface between the portions (44), each portion (44) including an interface face (48) to the interface, the guiding means (54) projecting from at least one of the interface faces (48) when the portions (44) are spread apart from one another.

10. A vehicle, in particular a motor vehicle, including a centering device (24) for a spare tyre (28) of a vehicle, **characterized in that** the centering device (24) is according to one of Claims 1 to 9, the spare tyre (28) including a rim (30) with a central opening (32) placed around the device (24) so as to hold the portions (44) one against the other.
